# FASCICULE DE BREVET EUROPEEN

(11) **EP 4 107 043 B1**
(45) Date de publication et mention de la délivrance du brevet: **01.05.2024**
(21) Numéro de dépôt: 21719947.0
(22) Date de dépôt: 14.01.2021
(51) Int. Cl.: B60W 30/14

(54) **PROCÉDÉ ET SYSTÈME POUR GÉRER LE FONCTIONNEMENT D'UN RÉGULATEUR DE VITESSE ADAPTATIF D'UN VÉHICULE AUTOMOBILE EN TENANT COMPTE DU COMPORTEMENT DE DEUX VÉHICULES PRÉCÉDENTS**
VERFAHREN UND SYSTEM ZUR STEUERUNG DES BETRIEBS EINES ADAPTIVEN FAHRGESCHWINDIGKEITSREGLERS EINES KRAFTFAHRZEUGS UNTER BERÜCKSICHTIGUNG DES VERHALTENS ZWEIER VORAUSFAHRENDER FAHRZEUGE
METHOD AND SYSTEM FOR MANAGING THE OPERATION OF AN ADAPTIVE CRUISE CONTROL OF A MOTOR VEHICLE TAKING INTO ACCOUNT THE BEHAVIOR OF TWO PRECEDING VEHICLES

(30) Priorité: 20.02.2020 FR 2001691
(43) Date de publication de la demande: 28.12.2022
(73) Titulaire: Stellantis Auto SAS, 78300 Poissy (FR)
(72) Inventeur: VIVET, Luc, 75016 Paris 16 (FR); TOUIL, Lhassane, Kenitra, 14000 (MA); MAHERAULT, Benoit, 91120 Palaiseau (FR)
(86) Numéro de dépôt international: PCT/FR2021/050058
(87) Numéro de publication internationale: WO 2021/165591

(56) Documents cités:
- FR-A1- 2 977 851
- US-A1- 2016 375 905
- US-A1- 2018 190 128
- US-A1- 2019 322 277

## Description

### Domaine technique de l'invention

La présente invention concerne le domaine des régulateurs de vitesse pour véhicules automobiles. L'invention porte en particulier sur un procédé de gestion du fonctionnement d'un régulateur de vitesse adaptatif d'un véhicule automobile. L'invention concerne également un système informatique mettant en oeuvre un tel procédé. L'invention s'applique notamment aux voitures, aux poids lourds, aux autobus, aux véhicules utilitaires, etc.

### État de la technique antérieure

On sait que certains véhicules automobiles actuels sont équipés de régulateurs de vitesse adaptatifs qui permettent de maintenir une vitesse de consigne préalablement établie et, si nécessaire, d'adapter, i.e. augmenter ou réduire, la vitesse en fonction d'une distance de séparation avec un autre véhicule qui est situé juste devant dans la même voie de circulation. On note cependant que, à cause du fait qu'ils tiennent compte uniquement du véhicule précédent sur la même voie de circulation, les régulateurs de vitesse adaptatifs connus peuvent être à l'origine d'inconfort pour les occupants des véhicules. En effet, dans une situation de conduite dans laquelle un premier véhicule automobile équipé d'un régulateur de vitesse adaptatif connu suit un deuxième véhicule automobile, qui, pour quelque raison que ce soit, décide de freiner, alors le régulateur de vitesse adaptatif va immédiatement gérer un freinage du premier véhicule. Or, dans la même situation, un conducteur du premier véhicule va prendre connaissance non seulement du comportement du deuxième véhicule qui le précède mais il va également tenir compte de celui d'un troisième véhicule qui précède le deuxième véhicule. Par exemple, sur autoroute ou voie rapide, notamment lorsque la circulation est dense, il arrive bien souvent que le véhicule précédent freine alors que le véhicule qui le précède ne freine pas. Dans ce cas, un conducteur peut, dans certains cas, décider qu'il a suffisamment de place pour ne pas décélérer en anticipant une prochaine accélération du véhicule qui le précède sur la base du comportement du troisième véhicule qui ne freine pas. Un tel comportement d'un conducteur réel va donc être plus confortable pour les occupants du véhicule car, contrairement à celui qu'un régulateur de vitesse connu mettrait en oeuvre, il ne va pas générer une succession en saccades de freinages et d'accélérations.

On connait par le document US2018/190128 un système et procédé de contrôle d'un véhicule dans un peloton de véhicules.

### Résumé de l'invention

L'invention vise à pallier cet inconvénient. L'invention a en particulier pour but de fournir un procédé et un système qui permettent à un régulateur de vitesse adaptatif d'un véhicule automobile de minimiser l'inconfort des occupants du véhicule dans une situation de conduite telle que celle évoquée en préambule.

Ce but est atteint, selon un premier objet de l'invention, au moyen d'un procédé de gestion, par un système informatique embarqué à bord d'un premier véhicule automobile, du fonctionnement d'un régulateur de vitesse adaptatif du premier véhicule, le procédé comprenant les étapes de :
i) déterminer si un deuxième véhicule automobile situé juste devant le premier véhicule était antérieurement situé juste devant le premier véhicule et si un troisième véhicule automobile situé juste devant le deuxième véhicule était antérieurement situé juste devant le deuxième véhicule ; et, lorsque tel n'est pas le cas, affecter une valeur nulle à un paramètre de cohérence courant, ou, lorsque tel est le cas,
ii) déterminer la vitesse instantanée de déplacement du deuxième véhicule ;
iii) déterminer la vitesse instantanée de déplacement du troisième véhicule ;
iv) déterminer une valeur d'un paramètre de divergence de vitesse en fonction de la vitesse instantanée de déplacement du deuxième véhicule et de la vitesse instantanée de déplacement du troisième véhicule ;
v) déterminer une valeur d'un paramètre de variation d'un indicateur de cohérence en fonction de la valeur d'un paramètre de divergence de vitesse ;
vi) déterminer une valeur d'un paramètre de cohérence courant en fonction de la valeur du paramètre de variation d'un indicateur de cohérence ; et
vii) gérer le fonctionnement du régulateur de vitesse adaptatif de telle sorte qu'une valeur de vitesse de consigne qu'il prend en compte est adaptée en fonction de la valeur du paramètre de divergence de vitesse et de la valeur du paramètre de cohérence courant.

Selon une variante, l'étape i) peut comprendre une étape consistant à déterminer une dimension, une couleur et/ou une classe du deuxième et du troisième véhicule.

Selon une autre variante, l'étape v) peut être réalisée en utilisant une fonction mathématique exprimant le paramètre de variation d'un indicateur de cohérence en fonction du paramètre de divergence de vitesse.

Selon une autre variante, les étapes i), ii) et iii) peuvent être réalisées en interagissant avec un système d'aide à la conduite du véhicule.

L'étape iv) comprend une étape consistant à déterminer la différence entre la vitesse instantanée de déplacement du troisième véhicule et la vitesse instantanée de déplacement du deuxième véhicule et à diviser cette différence par la vitesse instantanée de déplacement du deuxième véhicule.

Selon une autre variante, l'étape vii) peut comprendre une étape consistant à déterminer la valeur d'une vitesse de consigne en multipliant la valeur de la vitesse instantanée de déplacement du deuxième véhicule par une valeur corrective obtenue en multipliant la valeur du paramètre de divergence de vitesse et la valeur du paramètre de cohérence courant.

En outre, l'invention a également pour objet un système pour gérer le fonctionnement d'un régulateur de vitesse adaptatif d'un premier véhicule automobile, le système comprenant au moins une unité de traitement d'informations, comprenant au moins un processeur, et un support de stockage de données configurés pour mettre en oeuvre un procédé tel que décrit ci-dessus.

De plus, l'invention a aussi pour objet un programme comprenant des instructions de code de programme pour l'exécution des étapes d'un procédé tel que décrit ci-dessus lorsque ledit programme est exécuté sur un ordinateur et/ou un processeur.

Par ailleurs, l'invention a également pour objet un support utilisable dans un ordinateur sur lequel un programme tel que décrit ci-dessus est enregistré.

Enfin, l'invention a aussi pour objet un véhicule automobile comprenant un système tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] est un schéma fonctionnel d'un système selon l'invention ; et
[Fig. 2] est un organigramme illustrant les étapes d'un procédé selon l'invention.

### Description détaillée de l'invention

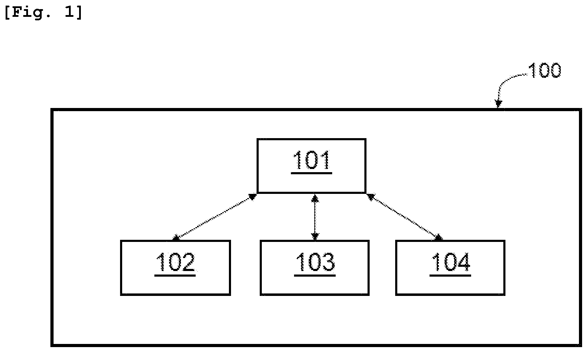

Selon l'invention, un système 100 pour gérer le fonctionnement d'un régulateur de vitesse adaptatif d'un premier véhicule automobile est un système informatique, représenté à la figure 1, qui comprend une unité de traitement d'informations 101, comprenant un ou plusieurs processeurs, un support de stockage de données 102, au moins une interface d'entrée et sortie 103, permettant la réception de données (ou signaux) et l'émission de données (ou signaux), et, éventuellement, un processeur de signal numérique 104 apte à recevoir des données, les démoduler, les amplifier, et ce conformément aux connaissances générales de l'homme du métier.

Selon certains modes de réalisation, le système 100 selon l'invention est embarqué dans un véhicule automobile (e.g. voitures, poids lourds, autobus, véhicules utilitaires, etc.) et il est hébergé sur un ou plusieurs des calculateurs ou autres unités de commande électroniques du véhicule. Selon d'autres modes de réalisation, le système 100 est hébergé sur un calculateur d'un véhicule automobile et il interagit par le biais de son interface d'entrée et sortie 103 avec un calculateur d'un régulateur de vitesse adaptatif du véhicule. Selon le mode de réalisation préféré, le système 100 selon l'invention fait partie intégrante d'un calculateur d'un régulateur de vitesse adaptatif d'un véhicule automobile.

De plus, pour mettre en oeuvre certaines étapes du procédé selon l'invention décrit ci-dessous, le système 100 selon l'invention comprend également des moyens matériels (e.g. connectique) et logiciels configurés pour interagir avec un système d'aide à la conduite d'un véhicule automobile et/ou avec tout autre système et/ou appareillage qui, de manière conventionnelle, fait partie et/ou interagit avec un système d'aide à la conduite d'un véhicule automobile actuel. Par exemple, selon l'invention, un système d'aide à la conduite comprend au moins un appareillage de détection (e.g. appareil de télédétection par laser, appareil de radiodétection, caméra, capteur à ultrasons, centrale inertielle, accéléromètre, etc.) et un ou plusieurs calculateurs, ordinateurs et/ou processeurs dédiés, qui, en fonction de données brutes générées par l'appareillage de détection, peuvent contrôler le fonctionnement de certains organes qui gouvernent le déplacement du véhicule (e.g. direction assistée électronique, correcteur électronique de trajectoire, ABS, régulateur de vitesse, etc.). Par ces moyens, le système 100 selon l'invention est notamment en mesure de déterminer si un deuxième véhicule automobile situé juste devant lui y était antérieurement situé et si un troisième véhicule automobile situé juste devant le deuxième véhicule y était antérieurement situé et de déterminer la vitesse instantanée de déplacement du deuxième véhicule et la vitesse instantanée de déplacement du troisième véhicule. De plus, grâce à ces moyens, le système 100 selon l'invention est aussi en mesure de déterminer une dimension, une couleur et/ou une classe (e.g. poids lourd, véhicule utilitaire, motocyclette, etc.) du deuxième et du troisième véhicule

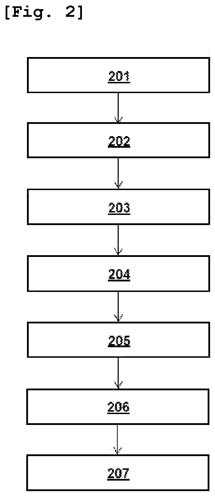

Selon l'invention, tous les éléments décrits ci-dessus contribuent pour permettre au système 100 selon l'invention de mettre en oeuvre un procédé de gestion du fonctionnement d'un régulateur de vitesse adaptatif d'un premier véhicule automobile, tel que décrit ci-dessous en lien avec la figure 2.

Selon une première étape 201 du procédé selon l'invention, le système 100 selon l'invention détermine si un deuxième véhicule automobile situé juste devant le premier véhicule était antérieurement situé juste devant le premier véhicule et si un troisième véhicule automobile situé juste devant le deuxième véhicule était antérieurement situé juste devant le deuxième véhicule.

Pour cela, le système 100 selon l'invention interagit avec le système d'aide à la conduite du véhicule pour obtenir des données générées au moyen de l'un de ses appareillages de détection (e.g. radar, lidar, caméra, etc.) afin de déterminer, par exemple, une dimension, une couleur et/ou une classe du deuxième et du troisième véhicule. Ensuite, le système 100 selon l'invention interagit avec un support de stockage de données, par exemple son support de stockage de données 102, dans lequel il a antérieurement enregistré, i.e. lorsqu'il a antérieurement mis en oeuvre le procédé selon l'invention, des données caractérisant une dimension, une couleur et/ou une classe d'un véhicule distant qui, à cet instant, se trouvait situé juste devant le premier véhicule et d'un véhicule distant qui, à cet instant aussi, se trouvait situé juste devant le deuxième véhicule. Ensuite, le système 100 selon l'invention compare ces informations avec celles qu'il acquiert à l'instant courant en interagissant avec le système d'aide la conduite du véhicule et il détermine ainsi si la situation a changé, i.e. si l'ordonnancement de véhicules à l'instant présent correspond à celui qui était lors de la dernière réalisation du procédé selon l'invention. Et, lorsqu'il est établi que tel n'est pas le cas, i.e. que l'un des véhicules précédents a changé depuis la dernière réalisation du procédé selon l'invention, le système 100 selon l'invention affecte une valeur nulle à un paramètre de cohérence courant et il met fin à la mise en oeuvre du procédé selon l'invention. A l'inverse, i.e. lorsque le système 100 selon l'invention détermine que les véhicules précédents n'ont pas changé, il met en oeuvre les étapes suivantes du procédé selon l'invention décrites ci-dessous. Ainsi, par cette première étape 201 du procédé selon l'invention, le système 100 selon l'invention assure sa propre réinitialisation (i.e. remise à zéro) lorsque l'environnement de conduite change, notamment lorsqu'une modification des véhicules précédents se produit, en fournissant ainsi une capacité d'adaptation dynamique apte à tenir compte d'un environnement de conduite changeant.

Selon une deuxième étape 202 du procédé selon l'invention, le système 100 selon l'invention détermine la vitesse instantanée de déplacement du deuxième véhicule, celui situé juste devant lui, et, selon une troisième étape 203 du procédé selon l'invention, il détermine la vitesse instantanée de déplacement du troisième véhicule, celui situé juste devant le deuxième véhicule. Pour ce faire, le système 100 selon l'invention interagit avec le système d'aide à la conduite pour obtenir des données générées grâce à l'un des ses appareillages de détection qui, de manière conventionnelle, notamment dans le cas du lidar, permettent la mise en oeuvre de la deuxième et la troisième étape du procédé selon l'invention.

Selon une quatrième étape 204 du procédé selon l'invention, le système 100 selon l'invention détermine une valeur d'un paramètre de divergence de vitesse en fonction de la vitesse instantanée de déplacement du deuxième véhicule et de la vitesse instantanée de déplacement du troisième véhicule. De préférence, il effectue pour ce faire une étape au cours de laquelle il détermine la différence entre la vitesse instantanée de déplacement du troisième véhicule et la vitesse instantanée de déplacement du deuxième véhicule, puis il détermine la valeur du paramètre de divergence de vitesse en divisant cette différence par la vitesse instantanée de déplacement du deuxième véhicule. En d'autres termes, la valeur du paramètre de divergence de vitesse, *p_{υ}*, est définie par l'équation *p_{υ}*=*(υ₃-υ₂)*/*υ₂,* où *υ₃* est la vitesse instantanée de déplacement du troisième véhicule et *υ*₂ est la vitesse instantanée de déplacement du deuxième véhicule.

Selon une cinquième étape 205 du procédé selon l'invention, le système 100 selon l'invention détermine une valeur d'un paramètre de variation d'un indicateur de cohérence, *d_{c},* en fonction de la valeur d'un paramètre de divergence de vitesse, *p*_{υ}. Pour ce faire, le système 100 selon l'invention utilise une fonction mathématique préétablie exprimant le paramètre de variation d'un indicateur de cohérence, *d_{c},* en fonction du paramètre de divergence de vitesse, *p_{υ}* (i.e *d_{c}*=*f(p_{υ})*). Une telle fonction mathématique est, par exemple, une fonction qui est affine sur un certain intervalle (e.g. tant que 0 ≤ *p_{υ}* ≤*p_{υ}Max,* où *p_{υ}Max* est une valeur seuil préétablie) et constante sur un autre (si *p_{υ}Max* ≤ *p_{υ}*).

Ensuite, au cours d'une sixième étape 206 du procédé selon l'invention, le système 100 selon l'invention détermine une valeur d'un paramètre de cohérence courant, *c(courant),* en fonction de la valeur du paramètre de variation d'un indicateur de cohérence, *d_{c}.* En effet, le système selon l'invention détermine la valeur du paramètre de cohérence en résolvant l'équation *c(courant)*= *c(antérieur)* + *d_{c},* où *c(antérieur)* est la valeur du paramètre de cohérence déterminé lors de la réalisation précédente de cette sixième étape du procédé selon l'invention. En d'autres termes, au cours de cette sixième étape 206, le système 100 selon l'invention incrémente la valeur du paramètre de cohérence antérieurement déterminée.

Enfin, au cours d'une septième étape 207 du procédé selon l'invention, le système 100 selon l'invention gère le fonctionnement du régulateur de vitesse adaptatif de telle sorte qu'une valeur de vitesse de consigne qu'il prend en compte, *V_{eq},* est adaptée en fonction de la valeur du paramètre de divergence de vitesse et de la valeur du paramètre de cohérence courant. Plus précisément, le système 100 selon l'invention détermine la valeur de la vitesse de consigne, *V_{eq},* en résolvant l'équation *V_{eq}* = *υ₂* * (*1* + *p_{υ} * c(courant)).* Par cette ultime étape, le système selon l'invention permet donc d'adapter la vitesse de consigne prise en compte par le régulateur de vitesse adaptatif non seulement en fonction du comportement (i.e. sa vitesse) du deuxième véhicule, celui situé juste devant lui, mais également en tenant compte du comportement du troisième véhicule, celui situé juste devant le deuxième véhicule.

Par conséquent, aux termes du procédé et du système selon l'invention décrits ci-dessus, une solution est fournie pour permettre à un régulateur de vitesse adaptatif d'un véhicule automobile de tenir compte du comportement de deux véhicules qui le précèdent, ce qui permet de minimiser l'inconfort des occupants du véhicule dans une situation de conduite telle que celle évoquée en préambule.

## Revendications

1. Procédé de gestion, par un système informatique (100) embarqué à bord d'un premier véhicule automobile, du fonctionnement d'un régulateur de vitesse adaptatif du premier véhicule le procédé comprenant les étapes de :
i) déterminer si un deuxième véhicule automobile situé juste devant le premier véhicule était antérieurement situé juste devant le premier véhicule et si un troisième véhicule automobile situé juste devant le deuxième véhicule était antérieurement situé juste devant le deuxième véhicule ; et, lorsque tel n'est pas le cas, affecter une valeur nulle à un paramètre de cohérence courant, ou, lorsque tel est le cas,
ii) déterminer la vitesse instantanée de déplacement du deuxième véhicule ;
iii) déterminer la vitesse instantanée de déplacement du troisième véhicule ;
iv) déterminer une valeur d'un paramètre de divergence de vitesse en fonction de la vitesse instantanée de déplacement du deuxième véhicule et de la vitesse instantanée de déplacement du troisième véhicule ;
v) déterminer une valeur d'un paramètre de variation d'un indicateur de cohérence en fonction de la valeur du paramètre de divergence de vitesse ;
vi) déterminer une valeur du paramètre de cohérence courant en fonction de la valeur du paramètre de variation d'un indicateur de cohérence ; et
vii) gérer le fonctionnement du régulateur de vitesse adaptatif de telle sorte qu'une valeur de vitesse de consigne qu'il prend en compte est adaptée en fonction de la valeur du paramètre de divergence de vitesse et de la valeur du paramètre de cohérence courant ;
le procédé de gestion **étant caractérisé en ce que**
l'étape iv) comprend une étape consistant à déterminer la différence entre la vitesse instantanée de déplacement du troisième véhicule et la vitesse instantanée de déplacement du deuxième véhicule et à diviser cette différence par la vitesse instantanée de déplacement du deuxième véhicule.

2. Procédé selon la revendication 1, **caractérisé en ce que** l'étape i) comprend une étape consistant à déterminer une dimension, une couleur et/ou une classe du deuxième et du troisième véhicule.

3. Procédé selon l'une des revendications précédentes, **caractérisé en ce que** l'étape v) est réalisée en utilisant une fonction mathématique exprimant le paramètre de variation d'un indicateur de cohérence en fonction du paramètre de divergence de vitesse.

4. Procédé selon l'une des revendications précédentes, **caractérisé en ce que** les étapes i), ii) et iii) sont réalisées en interagissant avec un système d'aide à la conduite du véhicule.

5. Procédé selon l'une des revendications précédentes, **caractérisé en ce que** l'étape vii) comprend une étape consistant à déterminer la valeur d'une vitesse de consigne en multipliant la valeur de la vitesse instantanée de déplacement du deuxième véhicule par une valeur corrective obtenue en multipliant la valeur du paramètre de divergence de vitesse et la valeur du paramètre de cohérence courant.

6. Système (100) pour gérer le fonctionnement d'un régulateur de vitesse adaptatif d'un premier véhicule automobile, **caractérisé en ce que** le système comprend au moins une unité de traitement d'informations (101), comprenant au moins un processeur, et un support de stockage de données (102) configurés pour mettre en oeuvre un procédé selon l'une quelconque des revendications précédentes.

7. Programme d'ordinateur comprenant des instructions de code de programme qui, lorsque le programme est exécuté par un ordinateur, conduisent celui-ci à mettre en oeuvre la méthode selon l'une quelconque des revendications 1 à 5.

8. Support utilisable dans un ordinateur, **caractérisé en ce qu'**un programme selon la revendication 7 y est enregistré.

9. Véhicule automobile, **caractérisé en ce qu'**il comprend un système selon la revendication 6.

## Patentansprüche

1. des Betriebs einer adaptiven Geschwindigkeitsregelung des ersten Fahrzeugs durch ein Computersystem (100) an Bord eines ersten Kraftfahrzeugs , wobei das Verfahren Folgendes umfasst: die Schritte von:
i) Bestimmen, ob sich ein zweites Kraftfahrzeug, das sich direkt vor dem ersten Fahrzeug befand, zuvor direkt vor dem ersten Fahrzeug befand und ob sich ein drittes Kraftfahrzeug, das sich direkt vor dem zweiten Fahrzeug befand, zuvor direkt vor dem zweiten Fahrzeug befand; und, wenn dies nicht der Fall ist, einem aktuellen Konsistenzparameter einen Nullwert zuweisen, oder, wenn dies der Fall ist,
ii) Bestimmen Sie die momentane Bewegungsgeschwindigkeit des zweiten Fahrzeugs.
iii) Bestimmen Sie die momentane Bewegungsgeschwindigkeit des dritten Fahrzeugs.
iv) Bestimmen eines Werts eines Geschwindigkeitsdivergenzparameters als Funktion der momentanen Bewegungsgeschwindigkeit des zweiten Fahrzeugs und der momentanen Bewegungsgeschwindigkeit des dritten Fahrzeugs;
v) Bestimmen eines Werts eines Variationsparameters eines Konsistenzindikators als Funktion des Werts des Geschwindigkeitsdivergenzparameters;
vi) Bestimmen eines Werts des aktuellen Konsistenzparameters als Funktion des Werts des Variationsparameters eines Konsistenzindikators; Und
vii) verwalten , dass ein von ihr berücksichtigter eingestellter Geschwindigkeitswert entsprechend dem Wert des Geschwindigkeitsdivergenzparameters und dem Wert des aktuellen Kohärenzparameters angepasst wird; **dadurch gekennzeichnet** ist der Managementprozess
Schritt iv) umfasst einen Schritt, der darin besteht, die Differenz zwischen der momentanen Bewegungsgeschwindigkeit des dritten Fahrzeugs und der momentanen Bewegungsgeschwindigkeit des zweiten Fahrzeugs zu bestimmen und diese Differenz durch die momentane Bewegungsgeschwindigkeit des zweiten Fahrzeugs zu dividieren .

2. Verfahren nach Anspruch 1, **dadurch gekennzeichnet, dass** Schritt i) einen Schritt umfasst, der darin besteht, eine Abmessung, eine Farbe und/oder eine Klasse des zweiten und des dritten Fahrzeugs zu bestimmen .

3. Verfahren nach einem der vorhergehenden Ansprüche, **dadurch gekennzeichnet, dass** Schritt v) unter Verwendung einer mathematischen Funktion durchgeführt wird, die den Variationsparameter eines Kohärenzindikators als Funktion des Geschwindigkeitsdivergenzparameters ausdrückt.

4. Verfahren nach einem der vorhergehenden Ansprüche, **dadurch gekennzeichnet, dass die** Schritte i), ii) und iii) durch Interaktion mit einem Fahrzeugfahrassistenzsystem durchgeführt werden .

5. Verfahren nach einem der vorhergehenden Ansprüche, **dadurch gekennzeichnet, dass** Schritt vii) einen Schritt umfasst, der darin besteht, den Wert einer eingestellten Geschwindigkeit zu bestimmen, indem der Wert der momentanen Bewegungsgeschwindigkeit des zweiten Fahrzeugs mit einem Korrekturwert multipliziert wird, der durch Multiplikation des Werts erhalten wird des Geschwindigkeitsdivergenzparameters und dem Wert des aktuellen Kohärenzparameters.

6. System (100) zur Verwaltung des Betriebs einer adaptiven Geschwindigkeitsregelung eines ersten Kraftfahrzeugs, **dadurch gekennzeichnet, dass** das System mindestens eine Informationsverarbeitungseinheit (101), umfassend mindestens einen Prozessor, und ein konfiguriertes Datenspeichermedium (102) umfasst ein Verfahren nach einem der vorhergehenden Ansprüche umzusetzen .

7. Computerprogramm, das Programmcodeanweisungen umfasst , die, wenn das Programm von einem Computer ausgeführt wird, den Computer veranlassen, das Verfahren nach einem der Ansprüche 1 bis 5 auszuführen.

8. In einem Computer verwendbares Medium, **dadurch gekennzeichnet, dass** dort ein Programm nach Anspruch 7 aufgezeichnet ist.

9. Kraftfahrzeug, **dadurch gekennzeichnet, dass** es ein System nach Anspruch 6 umfasst.

## Claims

1. Method for managing, by a computer system (100) on board a first motor vehicle , the operation of an adaptive cruise control of the first vehicle, the method comprising the steps of:
i) determining whether a second motor vehicle located directly in front of the first vehicle was previously located directly in front of the first vehicle and whether a third motor vehicle located directly in front of the second vehicle was previously located directly in front of the second vehicle; and, when this is not the case, assign a zero value to a current consistency parameter, or, when this is the case,
ii) determine the instantaneous speed of movement of the second vehicle;
iii) determine the instantaneous speed of movement of the third vehicle;
iv) determining a value of a speed divergence parameter as a function of the instantaneous speed of movement of the second vehicle and the instantaneous speed of movement of the third vehicle;
v) determining a value of a variation parameter of a consistency indicator as a function of the value of the speed divergence parameter;
vi) determine a value of the current consistency parameter as a function of the value of the variation parameter of a consistency indicator; And
vii) manage the operation of the adaptive cruise control such that a set speed value that it takes into account is adapted according to the value of the speed divergence parameter and the value of the current coherence parameter; the management process being **characterized in that**
step iv) comprises a step consisting of determining the difference between the instantaneous speed of movement of the third vehicle and the instantaneous speed of movement of the second vehicle and of dividing this difference by the instantaneous speed of movement of the second vehicle .

2. Method according to claim 1, **characterized in that** step i) comprises a step consisting of determining a dimension, a color and/or a class of the second and the third vehicle .

3. Method according to one of the preceding claims, **characterized in that** step v) is carried out using a mathematical function expressing the variation parameter of a coherence indicator as a function of the speed divergence parameter.

4. Method according to one of the preceding claims, **characterized in that** steps i), ii) and iii) are carried out by interacting with a vehicle driving assistance system .

5. Method according to one of the preceding claims, **characterized in that** step vii) comprises a step consisting of determining the value of a set speed by multiplying the value of the instantaneous speed of movement of the second vehicle by a corrective value obtained by multiplying the value of the speed divergence parameter and the value of the current coherence parameter.

6. System (100) for managing the operation of an adaptive cruise control of a first motor vehicle, **characterized in that** the system comprises at least one information processing unit (101), comprising at least one processor, and a data storage medium (102) configured to implement a method according to any one of the preceding claims .

7. Computer program comprising program code instructions which, when the program is executed by a computer, cause the computer to implement the method according to any one of claims 1 to 5.

8. Medium usable in a computer, **characterized in that** a program according to claim 7 is recorded there.

9. Motor vehicle, **characterized in that** it comprises a system according to claim 6.
